(19)

Europäisches
Patentamt
European
Patent Office
Office européen
des brevets

(11) **EP 1 825 905 A1**

(12) **EUROPEAN PATENT APPLICATION**
published in accordance with Art. 158(3) EPC

(43) Date of publication:
**29.08.2007 Bulletin 2007/35**

(51) Int Cl.:
**B01D 71/56** (2006.01)   **B01D 69/12** (2006.01)

(21) Application number: **05781966.6**

(22) Date of filing: **09.09.2005**

(86) International application number:
**PCT/JP2005/016617**

(87) International publication number:
**WO 2006/038425 (13.04.2006 Gazette 2006/15)**

(84) Designated Contracting States:
**DE ES IT**

(30) Priority: **01.10.2004 JP 2004290397**
**29.03.2005 JP 2005094604**

(71) Applicant: **NITTO DENKO CORPORATION**
**Ibaraki-shi, Osaka 567-8680 (JP)**

(72) Inventors:
• **Ohara, Tomomi,**
**Nitto Denko Corporation**
**Osaka, 5678680 (JP)**
• **Harada, Chiaki,**
**Nitto Denko Corporation**
**Osaka, 5678680 (JP)**
• **Inoue, Tetsuo,**
**Nitto Denko Corporation**
**Osaka, 5678680 (JP)**

• **Kurata, Naoki,**
**Nitto Denko Corporation**
**Osaka, 5678680 (JP)**
• **Konishi, Takahisa,**
**Nitto Denko Corporation**
**Osaka, 5678680 (JP)**
• **Kamada, Takashi,**
**Nitto Denko Corporation**
**Osaka, 5678680 (JP)**
• **Machinaga, Hironobu,**
**Nitto Denko Corporation**
**Osaka, 5678680 (JP)**

(74) Representative: **Sajda, Wolf E. et al**
**MEISSNER, BOLTE & PARTNER**
**Postfach 86 06 24**
**81633 München (DE)**

(54) **SEMIPERMEABLE COMPOSITE MEMBRANE AND PROCESS FOR PRODUCING THE SAME**

(57)   The present invention aims at providing a composite semipermeable membrane excellent in water permeability and salt-blocking rate, and including an extremely small amount of unreacted polyfunctional amine components in the membrane, and at providing a process for producing the composite semipermeable membrane. A composite semipermeable membrane having a skin layer formed on the surface of a porous support, the skin layer comprising a polyamide resin obtained by interfacial polymerization of a polyfunctional amine component and a polyfunctional acid halide component, wherein the content of an unreacted polyfunctional amine component is 200 mg/m$^2$ or less after formation of the skin layer and before a membrane washing treatment, and the content of the unreacted polyfunctional amine component after the membrane washing treatment is 20 mg/m$^2$ or less.

**EP 1 825 905 A1**

**Description**

FIELD OF THE INVENTION

The present invention relates to a composite semipermeable membrane having a skin layer which includes a polyamide resin and a porous support that supports the skin layer, and to a process for producing the composite semipermeable membrane. The composite semipermeable membranes are suitably used for production of ultrapure water, desalination of brackish water or sea water, etc., and usable for removing or collecting pollution sources or effective substances from pollution, which causes environment pollution occurrence, such as dyeing drainage and electrodeposition paint drainage, leading to contribute to closed system for drainage. Furthermore, the membrane can be used for concentration of active ingredients in foodstuffs usage, for an advanced water treatment, such as removal of harmful component in water purification and sewage usage etc.

DESCRIPTION OF THE RELATED ART

Recently, many composite semipermeable membranes, in which a skin layer includes polyamides obtained by interfacial polymerization of polyfunctional aromatic amines and polyfunctional aromatic acid halides and is formed on a porous support, have been proposed (Japanese Patent Application Laid-Open Nos. 55-147106, 62-121603, 63-218208, and 02-187135). A composite semipermeable membrane, in which a skin layer includes a polyamide obtained by interfacial polymerization of a polyfunctional aromatic amine and a polyfunctional alicyclic acid halide and is formed on a porous support, has been also proposed (Japanese Patent Application Laid-Open No. 61-42308).
However, when it is needed to obtain a target compound condensed or refined as permeated liquid or non-permeated liquid using conventional semipermeable membranes in actual cases, there has occurred problems that unreacted components eluted or flowing out from parts constituting the membrane or the membrane module may reduce purity of the targeted compound. In order to solve with this problem, sufficient washing is given to these semipermeable membranes and membrane modules in advance of use, but this washing operation generally may take long time or need high energy and, may reduce membrane performances, such as flux of the membrane.
There have been proposed a process of processing the membrane with a solution of sodium hydrogensulfite of 0.01 to 5% by weight, at a temperature from approximately 20 to 100°C, for approximately 1 to 60 minutes in order to remove unreacted components from the semipermeable membrane (Patent No. 2947291 specification), a process of removing unreacted residual materials by contact of an organic material aqueous solution to a composite semipermeable membrane (Japanese Patent Application Laid-Open No. 200-24470), and a process of extracting excessive components remaining in the base material by successive bath of citric acid, bleaching agents, and the like (Published Japanese translation of a PCT application No. 2002-516743).
On the other hand, a membrane separation process, in which filtration of a water to be treated is accompanied by concurrent ultrasonic cleaning of the membrane element in order to separate and remove solid matters that are attached to the film surface of the membrane element and cannot be easily released and pollution in fine pores, and to prevent solid matters from attaching on the film surface (Japanese Patent Application Laid-Open No. 11-319517).
A process of manufacturing a fluid separation membrane, in which unreacted aromatic monomers can be removed by washing with a cleaning liquid at a temperature of 50°C or more, has been proposed (Patent No. 3525759 specification).
However, unreacted components cannot fully be removed by the above-mentioned processes, and target permeated liquid with high purity cannot be obtained. In addition, since the prolonged processing is necessary in order to fully remove the unreacted components, the performance of the membrane decrease. Furthermore, the process described in Japanese Patent Application Laid-Open No. 11-319517 is a method of removing pollution attached to the film surface of the membrane element during membrane-separation operation, and is not a method of removing unreacted residual materials in the membrane element.

SUMMARY OF THE INVENTION

The present invention aims at providing a composite semipermeable membrane excellent in water permeability and salt-blocking rate, and including an extremely small amount of unreacted polyfunctional amine components in the membrane, and at providing a process for producing the composite semipermeable membrane.
As a result of wholehearted investigation performed by the present inventors for attaining the above-described objects, the inventors have found that control, at a specific amount or less, of the content of unreacted polyfunctional amine components before a membrane washing treatment can significantly reduce the content of the unreacted polyfunctional amine components in the composite semipermeable membrane with simpler and shorter membrane washing treatment, and have completed the present invention.

The present invention relates to a composite semipermeable membrane having a skin layer formed on the surface of a porous support, the skin layer comprising a polyamide resin obtained by interfacial polymerization of a polyfunctional amine component and a polyfunctional acid halide component, wherein the content of an unreacted polyfunctional amine component is 200 mg/m$^2$ or less after formation of the skin layer and before a membrane washing treatment, and the content of the unreacted polyfunctional amine component after the membrane washing treatment is 20 mg/m$^2$ or less. The content of the unreacted polyfunctional amine component after a membrane washing treatment is preferably 15 mg/m$^2$ or less, and more preferably 10 mg/ m$^2$ or less.

In addition, the present invention relates to a process for producing a composite semipermeable membrane having a skin layer formed on the surface of a porous support, the skin layer comprising a polyamide resin obtained by interfacial polymerization of a polyfunctional amine component and a polyfunctional acid halide component, comprising the steps of:

applying an amine impermeable treatment to the porous support before formation on the porous support of a covering layer of an aqueous solution comprising an amine aqueous solution containing a polyfunctional amine component; and

treating the membrane by a membrane washing treatment for adjusting the content of the unreacted polyfunctional amine component to be 20 mg/m$^2$ or less after formation of the skin layer.

According to the process of producing the composite semipermeable membrane, application of impermeable treatment to amine for a porous support can effectively prevent polyfunctional amine components from permeating into the porous support. This process can reduce the content of the unreacted polyfunctional amine component in the porous support after skin layer formation. Subsequent simple and short period of membrane washing treatment can reduce the content of the unreacted polyfunctional amine component in the composite semipermeable membrane to an amount of 20 mg/m$^2$ or less, preferably 15 mg/m$^2$ or less, and more preferably 10 mg/m$^2$ or less, with little deterioration of membrane performance.

In the present invention, the content of the unreacted polyfunctional amine component after formation of the skin layer and before a membrane washing treatment is preferably 200 mg/m$^2$ or less. When the content of the unreacted polyfunctional amine component before a membrane washing treatment is kept 200 mg/m$^2$ or less, the membrane washing treatment can be performed in an extremely short period of time, and deterioration of the membrane performance caused by the membrane washing can be more effectively controlled.

In the present invention, the amine impermeable treatment can preferably reduce the water content in the porous support to 20 g/m$^2$ or less. The water content in the porous support is more preferably 10 g/m$^2$ or less, and is especially preferably 1 g/m$^2$ or less. Since the polyfunctional amine component is dissolved in water and is applied to the porous support, reduction of the water content in the porous support to 20 g/m$^2$ or less can effectively control permeation and diffusion of the polyfunctional amine component into the porous support.

In addition, the viscosity of the amine aqueous solution is preferably 7 mPa·s or more, and more preferably 10 mPa·s or more.

In addition, in the amine aqueous solution, the moving velocity of the polyfunctional amine component in the porous support by contact at atmospheric pressure to the porous support preferably is 0.3 mg/m$^2$·sec or less, and more preferably 0.1 mg/m$^2$·sec. or less.

As mentioned above, adjustment of the viscosity of the amine aqueous solution or the moving velocity in the porous support can effectively control permeation of the polyfunctional amine component into the porous support.

The process of producing the composite semipermeable membrane of the present invention preferably includes a process for applying an amine aqueous solution so that the amount of the polyfunctional amine component supplied on the porous support may be 200 to 600 mg/m$^2$. The amount of the polyfunctional amine component may be more preferably 400 to 600 mg/m$^2$. The amount of the polyfunctional amine component less than 200 mg/m$^2$ may easily cause defect such as pinholes in the skin layer, and tends to give difficulty in formation of a uniform high-performance skin layer. On the other hand, the amount exceeding 600 mg/m$^2$ gives of an excessive amount of the polyfunctional amine component on the porous support, and tends to allow easy permeation of the polyfunctional amine component into the porous support, or to deteriorate the water permeability and salt-blocking property of the obtained membrane.

In addition, the process of producing the composite semipermeable membrane according to the present invention preferably includes a moisturing treatment for moisturing the membrane after a membrane washing treatment, and a drying step for drying the membrane after moisturing treatment. From viewpoints of subsequent processability, preservability, etc., the composite semipermeable membrane is preferably a dry type.

When, after a membrane washing treatment for removing unreacted polyfunctional amine components from the composite membrane comprising a porous support having a skin layer formed on the surface thereof, the washed composite membrane is dried, there is shown a tendency for salt-blocking property and permeation flux of the dried composite semipermeable membrane obtained to greatly deteriorate, compared with that of the composite semipermeable membrane before drying. In particular, the permeation flux tends to significantly deteriorate. However, as in the present invention, washing removal of the unreacted polyfunctional amine component from the membrane after preparation of the membrane, and application of moisturing treatment to the membrane before drying the washed membrane can provide a composite semipermeable membrane excellent in water permeability and salt-blocking property even after a drying treatment.

In addition, in the process of producing the composite semipermeable membrane of the present invention, it is preferred that the membrane washing treatment is a process for performing simultaneous moisturing treatment with washing, and furthermore the producing process includes a drying step for drying the membrane provided with washing moisturing treatment.

Simultaneous operation of washing and moisturing treatment can improve manufacturing efficiency.

In the present invention, moisturizers used in the moisturing treatment are preferably of organic acid metal salts and/or inorganic acid metal salts.

The organic acid metal salt preferably include at least one kind of organic acid alkali metal salt selected from the group consisting of alkali metal acetate, alkali metal lactate, and alkali metal glutamate. The alkali metal is preferably selected from sodium or potassium.

In addition, the inorganic acid metal salt preferably includes at least one kind of inorganic acid alkali metal salt selected from the group consisting of alkali metal hydrogencarbonate, dialkali metal monohydrogen phosphate, monoalkali metal dihydrogen phosphate. The alkali metal is preferably selected from sodium or potassium.

Although a prolonged moisturing treatment is needed in order to obtain necessary effect when using as surfactants and saccharides as a moisturizer, use of the organic acid metal salts and/ or inorganic acid metal salts can give sufficient effect by extremely short-time moisturing treatment, leading to great advantage on the productive process. In addition, although use of the surfactants or saccharides as a moisturizer may give poor effect depending on drying conditions (temperature, period of time, etc.), use of the organic acid metal salts and/or inorganic acid metal salts can provide sufficient effect independently of dry conditions, resulting in great advantage on the productive processes.

In addition, the present invention relates to a composite semipermeable membrane obtained by the producing process.

The composite semipermeable membrane of the present invention has extremely little amount of unreacted polyfunctional amine components therein, and does not present deterioration of membrane performance owing to avoidance of excessive membrane washing, leading to excellent water permeability and salt-blocking rate.

BEST MODE FOR CARRYING OUT OF THE INVENTION

Hereinafter, Embodiments of the present invention will be described. In the composite semipermeable membrane of the present invention, a skin layer including a polyamide resin obtained by interfacial polymerization of a polyfunctional amine component and a polyfunctional acid halide component is formed on the surface of a porous support, wherein the content of the unreacted polyfunctional amine component is 200 mg/m$^2$ or less after formation of the skin layer and before a membrane washing treatment, and the content of the unreacted polyfunctional amine component after the membrane washing treatment is 20 mg/m$^2$ or less. The composite semipermeable membrane, for example, may be produced in such a manner that an amine impermeable treatment is applied to the porous support before formation of a covering layer of aqueous solution on the porous support comprising an amine aqueous solution including the polyfunctional amine component, and a membrane washing treatment is performed after formation of the skin layer.

The polyfunctional amine component is defined as a polyfunctional amine having two or more reactive amino groups, and includes aromatic, aliphatic, and alicyclic polyfunctional amines.

The aromatic polyfunctional amines include, for example, m-phenylenediamine, p-phenylenediamine, o-phenylenediamine, 1,3,5-triamino benzene, 1,2,4-triamino benzene, 3,5-diaminobenzoic acid, 2,4-diaminotoluene, 2,6-diaminotoluene, N,N'-dimethyl- m-phenylenediamine, 2,4-diaminoanisole, amidol, xylylene diamine etc.

The aliphatic polyfunctional amines include, for example, ethylenediamine, propylenediamine, tris(2-aminoethyl)amine, n-phenylethylenediamine, etc.

The alicyclic polyfunctional amines include, for example, 1,3-diaminocyclohexane, 1,2-diaminocyclohexane, 1,4-diaminocyclohexane, piperazine, 2,5-dimethylpiperazine, 4-aminomethyl piperazine, etc.

These polyfunctional amines may be used independently, and two or more kinds may be used in combination. In order to obtain a skin layer having a higher salt-blocking property, it is preferred to use the aromatic polyfunctional amines.

The polyfunctional acid halide component represents polyfunctional acid halides having two or more reactive carbonyl groups.

The polyfunctional acid halides include aromatic, aliphatic, and alicyclic polyfunctional acid halides.

The aromatic polyfunctional acid halides include, for example trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, chlorosulfonyl benzenedicarboxylic acid dichloride etc.

The aliphatic polyfunctional acid halides include, for example, propanedicarboxylic acid dichloride, butane dicarboxylic acid dichloride, pentanedicarboxylic acid dichloride, propane tricarboxylic acid trichloride, butane tricarboxylic acid trichloride, pentane tricarboxylic acid trichloride, glutaryl halide, adipoyl halide etc.

The alicyclic polyfunctional acid halides include, for example, cyclopropane tricarboxylic acid trichloride, cyclobutanetetracarboxylic acid tetrachloride, cyclopentane tricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, tetrahydrofuran dicarboxylic acid dichloride, etc.

These polyfunctional acid halides may be used independently, and two or more kinds may be used in combination. In order to obtain a skin layer having higher salt-blocking property, it is preferred to use aromatic polyfunctional acid halides. In addition, it is preferred to form a cross linked structure using polyfunctional acid halides having trivalency or more as at least a part of the polyfunctional acid halide components.

Furthermore, in order to improve performance of the skin layer including the polyamide resin, polymers such as polyvinyl alcohol, polyvinylpyrrolidone, and polyacrylic acids etc., and polyhydric alcohols, such as sorbitol and glycerin. may be copolymerized.

The porous support for supporting the skin layer is not especially limited as long as it has a function for supporting the skin layer, and usually ultrafiltration membrane having micro pores with an average pore size approximately 10 to 500 angstroms may preferably be used. Materials for formation of the porous support include various materials, for example, polyarylether sulfones, such as polysulfones and polyether sulfones; polyimides; polyvinylidene fluorides; etc., and polysulfones and polyarylether sulfones are especially preferably used from a viewpoint of chemical, mechanical, and thermal stability. The thickness of this porous support is usually approximately 25 to 125 $\mu$m, and preferably approximately 40 to 75 $\mu$m, but the thickness is not necessarily limited to them. The porous support may be reinforced with backing by cloths, nonwoven fabric, etc.

Processes for forming the skin layer including the polyamide resin on the surface of the porous support is not in particular limited, and any publicly known methods may be used. For example, the publicly known methods include an interfacial condensation method, a phase separation method, a thin film application method, etc. The interfacial condensation method is a method, wherein an amine aqueous solution containing a polyfunctional amine component, an organic solution containing a polyfunctional acid halide component are forced to contact together to form a skin layer by an interfacial polymerization, and then the obtained skin layer is laid on a porous support, and a method wherein a skin layer of a polyamide resin is directly formed on a porous support by the above-described interfacial polymerization on a porous support. Details, such as conditions of the interfacial condensation method, are described in Japanese Patent Application Laid-Open No. 58-24303, Japanese Patent Application Laid-Open No. 01-180208, and these known methods are suitably employable.

In the present invention, it is especially preferred that an amine impermeable treatment is applied to a porous support, before application of an amine aqueous solution, subsequently, a covering layer of aqueous solution made from the amine aqueous solution containing a polyfunctional amine components is formed on the porous support, then an interfacial polymerization is performed by contact with an organic solution containing a polyfunctional acid halide component, and the covering layer of aqueous solution, and then a skin layer is formed.

The amine impermeable treatment includes, for example:

1) a treatment for reducing, by drying, the water content in the porous support to be 20 g/m$^2$ or less;
2) a treatment for covering the surface of the porous support, and for impregnation into the porous support, using solvents of hydrocarbon solvents and naphthenic solvents etc. that do not substantially dissolve the polyfunctional amine component, and do not substantially mix with the amine aqueous solution;
3) a treatment for covering the surface of the porous support, and for impregnation into the porous support, using a solution of inorganic acids and organic acids (preferably pH 4 or less); and
4) a treatment for covering the surface of the porous support, and for impregnation into the porous support, using an aqueous solution having a viscosity of 10 mPa·s or more containing glycerin, ethylene glycol, polyethylene glycol, or polyvinyl alcohol. Of these treatments, a treatment for reducing the water content in the porous support to be 20 g/m$^2$ or less is especially preferable.

Furthermore, the permeation and diffusion of the polyfunctional amine component into the porous support can further be suppressed by adjustment of the viscosity of the amine aqueous solution to be 7 mPa·s or more, and by adjustment of the amine aqueous solution so that the moving velocity of the polyfunctional amine component in the porous support when forced to contact to the used porous support at atmospheric pressures may be 0.3 mg/m$^2$ ·sec or less. The method of adjusting the viscosity of the amine aqueous solution to be 7 mPa·s or more include, for example, a method of adding polyhydric alcohols, such as glycerin, ethylene glycol, and propylene glycol, to the aqueous solution.

The method of adjusting the amine aqueous solution so that the moving velocity of the polyfunctional amine component in the porous support may be 0.3 mg/m$^2$·sec or less includes, but not limited to, a method of reducing the surface tension of the amine aqueous solution, for example, a method of avoiding of addition of components, such as surfactants, a method of adjusting the pH to a neutral range according to composition of the amine aqueous solution.

In the interfacial-polymerization method, although the concentration of the polyfunctional amine component in the amine aqueous solution is not in particular limited, the concentration is preferably 0.1 to 5% by weight, and more preferably 0.5 to 2% by weight. Less than 0.1% by weight of the concentration of the polyfunctional amine component may easily cause defect such as pinhole in the skin layer, leading to tendency of deterioration of salt-blocking property. On the other hand, the concentration of the polyfunctional amine component exceeding 5% by weight allows easy permeation of the polyfunctional amine component into the porous support to be an excessively large thickness and to raise the permeation resistance, likely giving deterioration of the permeation flux.

Although the concentration of the polyfunctional acid halide component in the organic solution is not in particular limited, it is preferably 0.01 to 5% by weight, and more preferably 0.05 to 3% by weight. Less than 0.01% by weight of the concentration of the polyfunctional acid halide component is apt to make the unreacted polyfunctional amine component remain, to cause defect such as pinhole in the skin layer, leading to tendency of deterioration of salt-blocking property. On the other hand, the concentration exceeding 5% by weight of the polyfunctional acid halide component is apt to make the unreacted polyfunctional acid halide component remain, to be an excessively large thickness and to raise the permeation resistance, likely giving deterioration of the permeation flux.

The organic solvents used for the organic solution is not especially limited as long as they have small solubility to water, and do not cause degradation of the porous support, and dissolve the polyfunctional acid halide component. For example, the organic solvents include saturated hydrocarbons, such as cyclohexane, heptane, octane, and nonane, halogenated hydrocarbons, such as 1,1,2-trichlorofluoroethane, etc.
They are preferably saturated hydrocarbons having a boiling point of 300°C or less, and more preferably 200°C or less.

Various kinds of additives may be added to the amine aqueous solution or the organic solution in order to provide easy film production and to improve performance of the composite semipermeable membrane to be obtained. The additives include, for example, surfactants, such as sodium dodecylbenzenesulfonate, sodium dodecyl sulfate, and sodium lauryl sulfate; basic compounds, such as sodium hydroxide, trisodium phosphate, triethylamine, etc. for removing hydrogen halides formed by polymerization; acylation catalysts; compounds having a solubility parameter of 8 to 14 (cal/cm$^3$)$^{1/2}$ described in Japanese Patent Application Laid-Open No. 08-224452.

The period of time after application of the amine aqueous solution until application of the organic solution on the porous support depends on the composition and viscosity of the amine aqueous solution, and on the pore size of the surface layer of the porous support, and it is preferably 15 seconds or less, and more preferably 5 seconds or less. Application interval of the solution exceeding 15 seconds may allow permeation and diffusion of the amine aqueous solution to a deeper portion in the porous support, and possibly cause a large amount of the residual unreacted polyfunctional amine components in the porous support. In this case, removal of the unreacted polyfunctional amine component that has permeated to the deeper portion in the porous support is probably difficult even with a subsequent membrane washing treatment. Excessive amine aqueous solution may be removed after covering by the amine aqueous solution on the porous support.

In the present invention, after the contact with the covering layer of aqueous solution and the organic solution including the amine aqueous solution, it is preferred to remove the excessive organic solution on the porous support, and to dry the formed membrane on the porous support by heating at a temperature of 70°C or more, forming the skin layer. Heat-treatment of the formed membrane can improve the mechanical strength, heat-resisting property, etc. The heating temperature is more preferably 70 to 200°C, and especially preferably 100 to 150°C. The heating period of time is preferably approximately 30 seconds to 10 minutes, and more preferably approximately 40 seconds to 7 minutes.

The thickness of the skin layer formed on the porous support is not in particular limited, and it is usually approximately 0.05 to 2 μm, and preferably 0.1 to 1 μm.

In the composite semipermeable membrane thus produced before a membrane washing treatment, the content of the unreacted polyfunctional amine component is adjusted to 200 mg/m$^2$ or less, preferably 150 mg/m$^2$ or less, and more preferably 100 mg/m$^2$ or less.

In the present invention, the unwashed composite semipermeable membrane thus produced is subsequently subjected to a membrane washing treatment. The method of the membrane washing treatment is not in particular limited, but conventionally publicly known methods may be adopted. Following membrane washing treatment methods are especially preferred.

1) Method of washing the membrane by contact of the unwashed composite semipermeable membrane with pure water or ion exchange water.
2) Method of washing the membrane by contact of the unwashed composite semipermeable membrane with an aqueous solution containing an acidic substance and/or an inorganic salt, and an water-soluble organic substance.

The acidic substance concerned is not in particular limited as long as it is water-soluble, and for example, inorganic acids, such as hydrochloric acid, sulfuric acid, and phosphoric acid; organic acids, such as formic acid, acetic acid, and citric acid, may be mentioned.

The inorganic salt is not in particular limited as long as it is a inorganic salt that can form a complex with an amido group and, for example, lithium chloride (LiCl), calcium chloride ($CaCl_2$), rhodan calcium [Ca(SCN)2], and rhodan potassium (KSCN) may be mentioned.

The concentration of the acidic substance and/or the mineral salt in the aqueous solution is preferably 10 ppm to 50% by weight, more preferably 50 ppm to 20% by weight, and especially preferably 1 to 10% by weight. The concentration of the acidic substance and/or the mineral salt less than 10 ppm shows a tendency of making difficult efficient removal of the unreacted polyfunctional amine component from the semipermeable membrane. On the other hand, the concentration exceeding 50% by weight has a great influence on performance of the semipermeable membrane, and shows a tendency for permeation flux to deteriorate.

The water-soluble organic substance is not in particular limited, as long as it does not give adverse effect on membrane performance, and the substance include, for example, monohydric alcohols, such as methyl alcohol, ethyl alcohol, n-propyl alcohol, and isopropyl alcohol; polyhydric alcohols, such as ethylene glycol, triethylene glycol, and glycerin; ethers, such as ethylene glycol monomethyl ether, ethylene glycol monoethyl ether, and ethylene glycol monobutyl ether; polar solvents, such as dimethylformamide, dimethylacetamide, and n-methylpyrrolidone.

In view of the suppression effect of deterioration of removal performance and membrane performance of the unreacted polyfunctional amine component, the concentration of the water-soluble organic substance in the aqueous solution can be suitably adjusted for every material to be used, and it is approximately 1 to 90% by weight, more preferably 10 to 80% by weight, and especially preferably 20 to 50% by weight. Less than 1% by weight of the concentration of the water soluble organic substance shows a tendency of making difficult efficient removal of the unreacted polyfunctional amine component from the semipermeable membrane. On the other hand, the concentration exceeding 90% by weight has a great influence on performance of the semipermeable membrane, and shows a tendency for permeation flux to deteriorate.

3) A method of, first of all, making the unwashed composite semipermeable membrane contact with a solution including the water soluble organic substance, then making the semipermeable membrane contact with an aqueous solution containing the acidic substance to wash the membrane.

A reversed order of contact with solutions cannot fully remove the unreacted polyfunctional amine component. Firstly conducted contact of the unwashed composite semipermeable membrane with the solution containing the water soluble organic substance can accelerate hydrophilization and swelling of the membrane. Therefore, this process allows quick permeation of the aqueous solution including the acidic substance to an inner portion of the membrane in the subsequent contact treatment, and can increase washing effect.

Furthermore from a viewpoint of permeability into the membrane, the surface tension of the water soluble organic substance is preferably 0.04 N/m or less, and more preferably 0.02 to 0.035 N/m. The surface tension exceeding 0.04 N/m deteriorates permeability into the membrane, and shows a tendency of failing to give sufficient removing effect of the unreacted polyfunctional amine component. However, when a small amount of a water soluble organic substance having a surface tension exceeding 0.04 N/m is used with respect to the water soluble organic substance having a surface tension of 0.04 N/m or less, swelling of the membrane is promoted and washing effect may improve.

For example, in case of an aqueous solution containing 50% by weight of ethanol (surface tension: 0.022 N/m), and an aqueous solution containing 40% by weight of ethanol, and 10% by weight of diethylene glycol (surface tension: 0.045 N/m), use of the latter can efficiently remove the unreacted polyfunctional amine component. In the above described case, the same effect may be obtained as in the case where glycerin (surface tension: 0.063 N/m) is used instead of diethylene glycol. The amount of addition of the water soluble organic substance having a surface tension exceeding 0.04 N/m is dependent on the surface tension of the water soluble organic substance to be used, and usually, it is preferably 50 parts by weight or less with respect to 100 parts by weight of the water soluble organic substance having a surface tension of 0.04 N/m or less, and more preferably 30 parts by weight or less.

In consideration of the suppression effect of deterioration of removal performance and membrane performance of the unreacted polyfunctional amine component, the concentration of the water soluble organic substance in the solution can be suitably adjusted for every materials to be used, and usually, it is 1 to 100% by weight, preferably 10 to 80% by weight, and more preferably 20 to 50% by weight. It is especially preferred to use the aqueous solution having the above described concentration. The concentration of the water soluble organic substance less than 1% by weight shows a tendency of making difficult efficient removal of the unreacted polyfunctional amine component from the semipermeable membrane.

The concentration of the acidic substance in the aqueous solution is preferably 10 ppm to 50% by weight, more preferably 50 ppm to 20% by weight, and especially preferably 1 to 10% by weight. The concentration of the acidic substance less than 10 ppm shows a tendency of making difficult efficient removal of the unreacted polyfunctional amine component from the semipermeable membrane. On the other hand, the concentration exceeding 50% by weight has a great influence on the performance of the semipermeable membrane.

In the membrane washing methods 1) to 3) described above, examples of the method of contacting the solution to the semipermeable membrane include all methods, such as a dipping, a pressurized water flow, a spray, an application, and a showering, and the dipping and the pressurized water flow methods are preferably used in order to obtain sufficient effect of contacting.

The contact period of time is not limited at all, as long as the content of the unreacted polyfunctional amine component in the composite semipermeable membrane after a membrane washing treatment is 20 mg/m$^2$ or less, and as long as it is in a range acceptable in production. Thus, any period of time may be adopted as a contact period of time. Since the content of the unreacted polyfunctional amine component in the composite semipermeable membrane before a membrane washing treatment has a small amount of 200 mg/m$^2$ or less in the present invention, the membrane washing treatment needs only a short period of time contact. Although the contact period of time cannot necessarily be specified, it is usually several seconds to tens of minutes, and preferably 10 seconds to 3 minutes. Since the amount of removal of the unreacted polyfunctional amine component reaches an equilibrium, removing effect does not necessarily improve even with longer contact period of time. When the contact period of time is excessively lengthened, there is conversely shown a tendency for the membrane performance and manufacturing efficiency to deteriorate. Although the contact temperature in particular will not be limited as long as the solution is in a temperature range allowing existence as a liquid, from a view point of removing effect of the unreacted polyfunctional amine component, of prevention of the membrane from deterioration, and of easiness of treatment etc. the contact temperature is preferably 10 to 90°C, more preferably 10 to 60°C, and especially preferably 10 to 45°C.

In the contact of the solution by the pressurized water flow method, the pressure is not in particular limited, as long as the pressure in use of this solution with respect to the semipermeable membrane is in a range acceptable by the semipermeable membrane and the physical strength of the members and the equipment for pressure application. The pressurized water flow is preferably performed at 0.1 to 10 MPa, and more preferably at 1.5 to 7.5 Mpa. The pressurized water flow at a pressure less than 0.1 Mpa shows a tendency of extending the contact period of time, in order to obtain necessary effect. And when exceeding 10 Mpa, compaction caused by the pressure is apt to decrease the permeation flux.

4) Method of immersing the unwashed composite semipermeable membrane into a liquid, and conducting an ultrasonic membrane washing.

The liquid in which the semipermeable membrane is to be immersed is not in particular limited as long as it is a liquid that does not deteriorate the performance of the semipermeable membrane, and for example, aqueous solutions including organic solvent, distilled water, ion exchange water, organic substance, and inorganic substance may be used. It is especially preferred to use aqueous solutions containing alcohols, acids, or alkalis.

The alcohols include, for example, monohydric alcohols, such as methyl alcohol, ethyl alcohol, n-propyl alcohol, and isopropyl alcohol; polyhydric alcohols, such as ethylene glycol, diethylene glycol, triethylene glycol, and glycerin. These may be used independently and two or more kinds may be used in combination.

In consideration of removal performance of the unreacted polyfunctional amine component and the suppression effect of deterioration of the membrane performance, the alcohol concentration in the aqueous solution can be suitably adjusted for every material to be used, usually, it is approximately 1 to 90% by weight, more preferably 10 to 80% by weight, and especially preferably 20 to 50% by weight. Since the concentration less than 1% by weight of the alcohol does not allow sufficient swelling of the semipermeable membrane, it shows a tendency for synergistic effect with ultrasonic cleaning not to fully be obtained. On the other hand, the concentration exceeding 90% by weight has a great influence on performance of the semipermeable membrane, and shows a tendency for salt-blocking rate and permeation flux to deteriorate.

The acid to be used is not in particular limited, if it is a water-soluble acid, and for example, inorganic acids, such as hydrochloric acid, sulfuric acid, and phosphoric acid; organic acids, such as formic acid, acetic acid, and citric acid, may be mentioned.

The alkali to be used is not in particular limited, if it is a water-soluble alkali, and for example, alkali metal hydroxides, such as sodium hydroxide and potassium hydroxide, alkaline earth metal hydroxides, such as calcium hydroxide, ammonia, amines, may be mentioned.

In consideration of removal performance of the unreacted polyfunctional amine component and the suppression effect of deterioration of the membrane performance, the concentration of the acid or the alkali in the aqueous solution can be suitably adjusted for every material to be used, it is preferably 10 ppm to 50% by weight, more preferably 50 ppm to20% by weight, and especially preferably 1 to 10% by weight. Since the concentration less than 10 ppm of the acid or the alkali does not allow sufficient swelling of the semipermeable membrane, it shows a tendency for synergistic effect with ultrasonic cleaning not to fully be obtained. On the other hand, the concentration exceeding 50% by weight has a great influence on performance of the semipermeable membrane, and shows a tendency for salt-blocking rate and permeation flux to deteriorate.

The temperature of the liquid in which the semipermeable membrane is to be immersed is not in particular limited, in consideration of removal performance of the unreacted polyfunctional amine component, the suppression effect of deterioration of the membrane performance, easiness of treatment, etc., it is preferably 10 to 90°C, more preferably 10 to 60°C, and especially preferably 10 to 45°C.

In consideration of removal performance of the unreacted polyfunctional amine component and the suppression effect of deterioration of the membrane performance, the period of time needed for washing by supersonic wave can be suitably adjusted for every materials to be used, and it is usually several seconds several minutes, and preferably 10 seconds to 3 minutes. Since the amount of removal of the unreacted polyfunctional amine component reaches equilibrium, an excessively long washing period does not further improve removing effect, and an excessively long washing period shows a tendency for the membrane performance, or manufacturing efficiency to decrease.

The shape of the semipermeable membrane in performing the membrane washing treatment is not limited at all. That is, semipermeable membranes having any possible membrane shapes such as a shape of a membrane, or a shape of a spiral element, can be processed.

The composite semipermeable membrane produced by such a producing process has an extremely small amount of content of the unreacted polyfunctional amine component of 20 mg/m$^2$ or less, and therefore the permeated liquid that has been separated and refined or the target compound that has been condensed, using the composite semipermeable membrane, will have a high purity including very few impurities.

Furthermore, in order to improve salt-blocking property, water permeability, anti-oxidizing agent property, etc. of the composite semipermeable membrane, various publicly known conventional treatments may be applied to the film.

In the present invention, the semipermeable membrane after washed with the above described method may be dried, and it may be used as a dry type composite semipermeable membrane. In that case, it is necessary to apply the moisturing treatment to the semipermeable membrane before drying of the semipermeable membrane after washing.

A moisturing treatment is performed by supplying a moisturizer to the semipermeable membrane after washing. Detailed methods include immersion into a solution containing the moisturizer; application, spray, or pressurized water flow of a solution containing the moisturizer; and contact with a moisturizer vapor etc. The methods, however, are not limited to them, but publicly known methods may be adopted.

The moisturizer is not in particular limited as long as it is a compound that can give moisture retention to the semipermeable membrane after washing, and it includes, for example, organic acid alkali metal salts, such as sodium acetate, potassium acetate, sodium lactate, potassium lactate, sodium glutamate, and potassium glutamate; organic acid alkaline earth metal salts, such as magnesium acetate, calcium acetate, magnesium lactate, calcium lactate, magnesium glutamate, and calcium glutamate; inorganic acid alkaline metal salts, such as sodium hydrogencarbonate, potassium hydrogencarbonate, sodium carbonate, potassium carbonate, disodium monohydrogen phosphate, dipotassium monohydrogen phosphate, monosodium dihydrogen phosphate, monopotassium dihydrogen phosphate, sodium phosphate, potassium phosphate; inorganic acid alkaline earth metal salts, such as magnesium hydrogencarbonate, calcium hydrogencarbonate, magnesium carbonate, calcium carbonate, magnesium primary phosphate, calcium primary phosphate, magnesium secondary phosphate, calcium secondary phosphate, magnesium tertiary phosphate, calcium tertiary phosphate: alkali metal halides, such as sodium chloride; alkali earth metal halides, such as magnesium chloride; surfactants, such as sodium lauryl sulfate, lauryl potassium sulfate, sodium alkyl benzene sulfonate, and potassium alkylbenzene sulfonate; saccharides, such as glucose and saccharose; amino acids, such as glycine and leucine etc.

The concentration of the moisturizer in the solution is not in particular limited, and it is preferably 100 ppm to 30% by weight, and more preferably 500 ppm to 10% by weight. The concentration of the moisturizer less than 100 ppm cannot provide sufficient deterioration suppression effect of water permeability and salt-blocking rate after a drying treatment, and shows a tendency for a moisturing treatment period to be prolonged. On the other hand, the concentration of the moisturizer exceeding 30% by weight raises costs, and shows a tendency to have an adverse effect on membrane performance.

The immersion period is not in particular limited in immersion of the semipermeable membrane after washing into a solution containing the moisturizer, and it is preferably 0.1 seconds to 30 minutes, and more preferably 1 second to 10 minutes. The immersion period less than 0.1 second shows a tendency for the sufficient deterioration suppression effect of water permeability and salt-blocking rate after a drying treatment not to be exhibited. On the other hand, the immersion period exceeding 30 minutes cannot vary water permeability after a drying treatment, and the deterioration suppression effect of the salt-blocking rate, and disadvantageously deteriorate the manufacturing efficiency.

In the case of application of a solution containing the moisturizer to the semipermeable membrane after washing, the solution may be applied onto one side of the semipermeable membrane and may be applied onto both sides. In order to efficiently exhibit effect, the solution is preferably applied to both sides.

The temperature of the solution is not in particular limited as long as in a temperature range that allows existence of the solution as a liquid, and In consideration of moisture retention effect, prevention of the membrane from deterioration, ease of treatment, and the like, it is preferably 10 to 90°C, more preferably 10 to 60°C, and especially preferably 10 to 45°C.

When performing the contact treatment with the solution by the pressurized water flow method, the pressure in contacting this solution to the semipermeable membrane after washing is not limited at all in a range acceptable with respect to the physical strength of the semipermeable membrane and the members for pressurizing devices, and it is preferably 0.1 to 10 MPa, and more preferably 1.5 to 7.5 Mpa. The pressure less than 0.1 Mpa shows a tendency to lengthen the contact period in order to obtain needed effect, and on the other hand the pressure exceeding 10 Mpa shows a tendency to reduce the amount of water permeated due to compaction.

In the present invention, the washing and the moisturing treatment may be simultaneously given to the semipermeable membrane before washing. There may be mentioned a method of treatment that the moisturizer is added in the cleaning liquid used for washing to prepare a moisturing liquid for washing, and then the moisturing liquid for washing is then used for treatment.

The shape of the semipermeable membrane when performing a drying treatment is not limited at all. That is, semipermeable membranes having all possible membrane shapes such as a shape of a membrane, or a shape of a spiral material, can be subjected to the drying treatment. For example, the semipermeable membrane may be processed into a shape of a spiral to obtain a membrane unit, and then the membrane unit may be dried to produce a dry spiral element.

The temperature of drying treatment is not in particular limited, and it is preferably 20 to 150°C, and more preferably 40 to 130°C. The temperature less than 20°C needs an excessively long drying treatment period, and likely gives insufficient drying. The temperature exceeding 150°C shows a tendency to cause decrease of membrane performance due to structural change of the membrane caused by heat.

The period of the drying treatment is not in particular limited, and it is preferred that drying is performed until the amount of solvents in the semipermeable membrane is 5% by weight or less.

Since the dried composite semipermeable membrane according to the present invention is a dry type, it is excellent in workability and preservability. Furthermore, although the dried composite semipermeable membrane of the present invention is a dry type, it exhibits water permeability and salt-blocking property equivalent to those of the wet type composite semipermeable membrane.

EXAMPLE

The present invention will, hereinafter, be described with reference to Examples, but the present invention is not limited at all by these Examples.

[Evaluation and measuring method]

(Measurement of permeation flux and salt-blocking rate)

A composite semipermeable membrane produced with a shape of a flat film is cut into a predetermined shape and size, and is set to a cell for flat film evaluation. An aqueous solution containing NaCl of about 1500 mg/L and adjusted to a pH of 6.5 to 7.5 with NaOH was forced to contact to a supply side, and a permeation side of the membrane at a differential pressure of 1.5 Mpa at 25°C. A permeation velocity and an electric conductivity of the permeated water obtained by this operation were measured for, and a permeation flux ($m^3/m^2 \cdot d$) and a salt-blocking rate (%) were calculated. The correlation (calibration curve) of the NaCl concentration and the electric conductivity of the aqueous solution was beforehand made, and the salt-blocking rate was calculated by a following equation.

$$\text{Salt-blocking rate (\%)} = \{1 - (\text{NaCl concentration [mg/L] in permeated liquid}) / (\text{NaCl concentration [mg/L] in supply solution})\} \times 100$$

(Measurement of moving velocity of a polyfunctional amine component in a porous support)

An amine aqueous solution was forced to contact on one side of a porous support to be used at an ordinary pressure, and pure water was forced to contact to another side at the ordinary pressure. In definite period of time after contacting to pure water side by this operation, the amine begins to be detected, and then the concentration increases with progress of period of time. Where the gradient of concentration to period was stabilized, the gradient was defined as a moving velocity ($mg/m^2 \cdot sec$) of the amine component. Measurement of concentration of the amine component by the side of pure water was performed using a spectrophotometer for ultraviolet and visible region "UV-2450" (made by Shimadzu Corp.)

(Measurement of viscosity of amine aqueous solution)

Viscosity of an amine aqueous solution was measured for using BL type viscometer (made by Tokyo Keiki Co., Ltd.)

(Water content measurement in porous support)

A support sample with a predetermined area was dried with a predetermined temperature, and a water content of a porous support was calculated from a weight change before and after drying.

(Measurement of content of unreacted polyfunctional amine component)

A composite semipermeable membrane (25 mm$\phi$) produced in Examples and Comparative Examples before a membrane washing treatment was immersed into an aqueous solution (25°C) containing 50% by weight of ethanol and kept standing for about 8 hours to extract an unreacted polyfunctional amine component in the composite semipermeable membrane. A UV absorbance in 210 nm of the obtained extract was measured for. On the other hand, beforehand made was a correlation (calibration curve) between the concentration of the polyfunctional amine component in the 50% by weight ethanol aqueous solution and the absorbance at 210 nm of the aqueous solution. The amount of the unreacted polyfunctional amine component included in the composite semipermeable membrane before a membrane washing treatment was obtained using the calibration curve. The content of the unreacted polyfunctional amine component was measured for by the same method as described above using a composite semipermeable membrane (25 mm$\phi$) after a membrane washing treatment. The results are shown in Tables 1 to 3.

Production example 1

(Production of porous support)

A dope for manufacturing a membrane containing 18% by weight of a polysulfone (produced by Solvay, P-3500) dissolved in N,N-dimethylformamide (DMF) was uniformly applied so that it might give 200 $\mu$m in thickness in wet condition on a nonwoven fabric base material. Subsequently, it was immediately solidified by immersion in water at 40 to 50°C, and DMF as a solvent was completely extracted by washing. Thus a porous support having a polysulfone microporous layer was produced on the nonwoven fabric base material.

Example 1

The produced porous support was dried by heating at 40°C. The water content in the porous support after drying by heating was 1 g/m$^2$.
An aqueous solution of amines containing 1% by weight of m-phenylenediamine, 3% by weight of triethylamine, and 6% by weight of camphorsulfonic acid (moving velocity of amine component: 0.02 mg/m$^2$·sec) was applied to the porous support, and an excessive amount of the amine aqueous solution was removed by wiping to form a covering layer of aqueous solution. Subsequently, an iso octane solution containing 0.2% by weight of trimesic acid chloride was applied to the surface of the covering layer of aqueous solution. Subsequently, the excessive solution was removed, the material was kept standing for 3 minutes in a hot air dryer at 120 °C to form a skin layer containing a polyamide resin on the porous support, and thus an unwashed composite semipermeable membrane was obtained. Permeation examination was performed using the produced unwashed composite semipermeable membrane. The results of permeation examination are shown in Table 1.
The above-described unwashed composite semipermeable membrane was immersed in pure water at 50°C for 1 minute for membrane washing treatment to produce a composite semipermeable membrane.

Examples 2 to 15

Composite semipermeable membranes were produced and permeation examination was performed in the same manner as in Example 1, except for changing the drying temperature of the porous support, and the composition of the amine aqueous solution as shown in Table 1. The results of permeation examination are shown in Table 1 shows results.

Comparative example 1

A composite semipermeable membrane was produced in the same manner as in Example 1, and permeation examination was performed, except for not performing a drying treatment to the porous support, and changing the composition of the amine aqueous solution. Table 1 shows results of permeation examination. Since this Comparative example 1 has a large amount of content of the unreacted polyfunctional amine component, it did not exhibit satisfactory practical use.

Comparative example 2

A composite semipermeable membrane was produced in the same manner as in Example 1, and permeation examination was performed, except for not performing a drying treatment to the porous support, and changing the composition of the amine aqueous solution. The results of permeation examination are shown in Table 1. Since this comparative example 2 has a very large amount of content of the unreacted polyfunctional amine component, it did not exhibit satisfactory practical use.

Example 16

The produced porous support was air-dried at a room temperature. The water content in the porous support after drying was 1 g/m$^2$.

An aqueous solution of amines containing 1.5% by weight of m-phenylenediamine, 3% by weight of triethylamine, and 6% by weight of camphorsulfonic acid (moving velocity of amine component: 0.02 mg/m$^2$·sec) was applied on the porous support, and an excessive amount of the amine aqueous solution was removed by wiping to form a covering layer of aqueous solution. Subsequently, an iso octane solution containing 0.25% by weight of trimesic acid chloride was applied to the surface of the covering layer of aqueous solution. Subsequently, the excessive solution was removed, the material was kept standing for 3 minutes in a hot air dryer at 120 degree C to form a skin layer containing a polyamide resin on the porous support, and thus an unwashed composite semipermeable membrane was obtained. Permeation examination was performed using the produced unwashed composite semipermeable membrane. The results of permeation examination are shown in Table 1. The above-described unwashed composite semipermeable membrane was immersed in pure water at 50°C for 1 minute for a membrane washing treatment to produce a composite semipermeable membrane.

Example 17

A composite semipermeable membrane was produced in the same manner as in Example 16, and permeation examination was performed, except for using an amine aqueous solution (moving velocity of amine component: 0.03 mg/m$^2$·sec) containing 1.5% by weight of m-phenylenediamine, 4% by weight of triethylamines, and 8% by weight of camphorsulfonic acid.
The results of permeation examination are shown in Table 1.

Comparative example 3

A composite semipermeable membrane was produced in the same manner as in Example 16, and permeation examination was performed, except for setting the water content of the porous support as 30 g/m$^2$, and for using an amine aqueous solution (moving velocity of amine component: 2.7 mg/m$^2$·sec) containing 3% by weight of m-phenylenediamine, 3% by weight of triethylamine, 6% by weight of camphorsulfonic acid, and 0.15% by weight of sodium lauryl sulfate. The results of permeation examination are shown in Table 1. The Comparative example 3 does not exhibit satisfactory practical use since it has a very large amount of content of the unreacted polyfunctional amine component.

Example 18

The produced porous support was air-dried at 60 °C. The water content in the porous support after drying was 1 g/m$^2$.

An amount of 60 g/m$^2$ (m-phenylenediamine: 600 mg/m$^2$) of an amine aqueous solution containing 1% by weight of m-phenylenediamine, 3% by weight of triethylamines, and 6% by weight of camphor sulfone on the porous support was applied, and an excessive amount of the amine aqueous solution was removed by wiping to form a covering layer of aqueous solution. Subsequently, an iso octane solution containing 0.25% by weight of trimesic acid chloride was applied to the surface of the covering layer of aqueous solution. Subsequently, the excessive solution was removed, the material was kept standing for 3 minutes in a hot air dryer at 120 °C to form a skin layer containing a polyamide resin on the porous support, and thus an unwashed composite semipermeable membrane was obtained. Permeation examination was performed using the produced unwashed composite semipermeable membrane. The results of permeation examination are shown in Table 2.

The above-described unwashed composite semipermeable membrane was immersed in pure water at 50°C for 1 minute for a membrane washing treatment. Permeation examination was performed using the produced composite semipermeable membrane. The results of permeation examination are shown in Table 2.

Examples 19 to 22 and Comparative examples 4 to 6

As shown in Table 2, a composite semipermeable membrane was produced in the same manner as in Example 18, and permeation examination was performed, except for changing the water content of the porous support, and the composition of the amine aqueous solution. The results of permeation examination are shown in Table 2.

Example 23

The produced porous support was air-dried at a room temperature. The water content in the porous support after drying was $1g/m^2$.

An amine aqueous solution (viscosity: 7 mPa·s) containing 1.5% by weight of m-phenylenediamine, 3% by weight of triethylamines, 6% by weight of camphorsulfonic acid, and 50% by weight of ethylene glycol was applied on the porous support. The excessive amine aqueous solution was removed after that to form a covering layer of aqueous solution. Subsequently, an iso octane solution containing 0.2% by weight of trimesic acid chloride was applied to the surface of the covering layer of aqueous solution. Subsequently, the excessive solution was removed, the material was kept standing for 3 minutes in 120 °C hot air drying equipment to form a skin layer containing a polyamide resin on the porous support, and thus an unwashed composite semipermeable membrane was obtained. Permeation examination was performed using the produced unwashed composite semipermeable membrane. The results of permeation examination are shown in Table 3.

The above-described unwashed composite semipermeable membrane was immersed in pure water at 50°C for 1 minute for a membrane washing treatment to produce a composite semipermeable membrane.

Examples 24 and 25

A composite semipermeable membrane was produced in the same manner as in Example 23, and permeation examination was performed, except for changing the amount of addition of ethylene glycol as shown in Table 3. The results of permeation examination are shown in Table 3.

Example 26

The washed composite semipermeable membrane produced in the Example 1 was immersed for 10 minutes in a sodium acetate aqueous solution (concentration: 1% by weight) at 25°C, and a moisturized composite semipermeable membrane was produced. Subsequently, a dried composite semipermeable membrane was produced by drying the moisturized composite semipermeable membrane for 10 minutes at 120°C. The results of permeation examination are shown in Table 4.

Examples 27 to 44

Under conditions shown in Table 4, dried composite semipermeable membranes were produced in the same manner as in Example 26. The results of permeation examination are shown in Table 4.

Example 45

The unwashed composite semipermeable membrane produced in the same manner as in Example 1 was immersed for 10 minutes into a sodium acetate aqueous solution containing sodium acetate added in pure water (concentration: 1% by weight) at 50°C, and a washing and moisturing treatment were performed simultaneously to produce a moisturized composite semipermeable membrane. Subsequently, a dried composite semipermeable membrane was produced by drying the moisturized composite semipermeable membrane for 10 minutes at 120°C. The results of permeation examination are shown in Table 4.

Examples 46 and 47

Under conditions shown in Table 4, dried composite semipermeable membranes were produced in the same manner as in Example 45. The results of permeation examination are shown in Table 4.

Comparative example 4

A washed composite semipermeable membrane was produced in the same manner as in Example 1. Subsequently, the washed composite semipermeable membrane was dried for 2 minutes at 120°C, without giving a moisturing treatment, and a dried composite semipermeable membrane was produced. The results of permeation examination are shown in Table 4.

[Table 1]

| | Porous support | | Amine aqueous solution | | | Sodium lauryl sulfate (% by weight | Moving velocity (mg/m²·sec) |
|---|---|---|---|---|---|---|---|
| | Drying temperature (°C) | Water content (g/m²) | m-phenylenediamine (% by weight) | Triethylamine (% by weight) | Camphorsulfonic acid (% by weight) | | |
| Example 1 | 40 | 1 | 1 | 3 | 6 | – | 0.02 |
| Example 2 | 40 | 1 | 1.25 | 3 | 6 | – | 0.02 |
| Example 3 | 40 | 1 | 1.5 | 3 | 6 | – | 0.02 |
| Example 4 | 50 | 1 | 1 | 3 | 6 | – | 0.02 |
| Example 5 | 50 | 1 | 1.25 | 3 | 6 | – | 0.02 |
| Example 6 | 50 | 1 | 1.5 | 3 | 6 | – | 0.02 |
| Example 7 | 60 | 1 | 1.5 | 3 | 6 | – | 0.02 |
| Example 8 | 80 | 1 | 1.5 | 3 | 6 | – | 0.02 |
| Example 9 | Room temperature | 1 | 1 | 3 | 6 | – | 0.03 |
| Example 10 | Room temperature | 1 | 1.25 | 3 | 6 | – | 0.03 |
| Example 11 | Room temperature | 1 | 1.5 | 3 | 6 | – | 0.03 |
| Example 12 | Room temperature | 10 | 1 | 3 | 6 | – | 0.11 |
| Example 13 | Room temperature | 10 | 1.25 | 3 | 6 | – | 0.15 |
| Example 14 | Room temperature | 20 | 1 | 3 | 6 | – | 0.23 |
| Example 15 | Room temperature | 20 | 1.25 | 3 | 6 | – | 0.24 |
| Comparative example 1 | – | 60 | 1.25 | 3 | 6 | – | 1.8 |
| Comparative example 2 | – | 60 | 1.5 | 3 | 6 | – | 2.0 |
| Example 16 | Room temperature | 1 | 1.5 | 3 | 6 | – | 0.02 |
| Example 17 | Room temperature | 1 | 1.5 | 4 | 8 | – | 0.03 |
| Comparative example 3 | Room temperature | 30 | 3 | 3 | 6 | 0.15 | 2.7 |

| | Permeation examination | | Amount of unreacted polyfunctional amine component | |
| --- | --- | --- | --- | --- |
| | Salt blocking rate (%) before washing | Permeation flux (m³/m²·d) before washing | Before washing (mg/m²) | After washing (mg/m²) |
| Example 1 | 98.0 | 1.2 | 67 | 3.4 |
| Example 2 | 99.1 | 1.5 | 119 | 4.8 |
| Example 3 | 99.4 | 1.6 | 164 | 13 |
| Example 4 | 95.2 | 1.0 | 75 | <0.1 |
| Example 5 | 99.0 | 1.4 | 117 | 6.8 |
| Example 6 | 99.4 | 1.4 | 172 | 18.3 |
| Example 7 | 98.9 | 1.0 | 145 | 14.8 |
| Example 8 | 99.0 | 1.1 | 78 | 7.7 |
| Example 9 | 97.6 | 0.7 | 49 | <0.1 |
| Example 10 | 98.5 | 1.2 | 112 | 8.9 |
| Example 11 | 97.5 | 1.1 | 137 | 15.8 |
| Example 12 | 97.7 | 0.8 | 182 | 17.5 |
| Example 13 | 98.3 | 1.1 | 181 | 18.9 |
| Example 14 | 98.2 | 0.9 | 181 | 17.1 |
| Example 15 | 98.1 | 1.1 | 185 | 18.1 |
| Comparative example 1 | 98.7 | 0.7 | 208 | 34 |
| Comparative example 2 | 97.4 | 0.7 | 227 | 50 |
| Example 16 | 98.4 | 1.3 | 61 | 8 |
| Example 17 | 98.7 | 1.0 | 117 | 12 |
| Comparative example 3 | 97.6 | 0.7 | 336 | 110 |

[Table 2]

| | Porous support | | Amine aqueous solution | | | Amount of supply | |
|---|---|---|---|---|---|---|---|
| | Drying temperature (°C) | Water content (g/m²) | m-phenylenediamine (% by weight) | Triethylamine (% by weight) | Camphorsulfonic acid (% by weight) | Amine aqueous solution (g/m²) | Polyfunctional amine component (mg/m²) |
| Example 18 | 60 | 1 | 1 | 3 | 6 | 60 | 600 |
| Example 19 | 60 | 1 | 1 | 3 | 6 | 40 | 400 |
| Example 20 | 60 | 1 | 1.5 | 2 | 4 | 40 | 600 |
| Example 21 | 60 | 1 | 1.5 | 3 | 6 | 40 | 600 |
| Example 22 | 60 | 1 | 1.5 | 4 | 8 | 40 | 600 |
| Comparative example 4 | 60 | 30 | 4 | 3 | 6 | 20 | 800 |
| Comparative example 5 | 60 | 30 | 4 | 3 | 6 | 30 | 1200 |
| Comparative example 6 | 60 | 30 | 4 | 3 | 6 | 40 | 1600 |

| | Permeation examination | | | | Amount of unreacted polyfunctional amine component | |
|---|---|---|---|---|---|---|
| | Salt blocking rate (%) | | Permeation flux (m³/m²·d) | | Before washing (mg/m²) | After washing (mg/m²) |
| | Before washing | After washing | Before washing | After washing | | |
| Example 18 | 98.5 | 98.2 | 1.3 | 1.5 | 23 | <0.1 |
| Example 19 | 98.2 | 97.6 | 1.1 | 1.1 | 19 | <0.1 |
| Example 20 | 95.8 | 95.0 | 0.7 | 0.6 | 3 | <0.1 |
| Example 21 | 98.4 | 98.0 | 1.3 | 1.4 | 38 | 11.2 |
| Example 22 | 98.7 | 98.8 | 1.0 | 1.2 | 110 | 11.3 |
| Comparative example 4 | 96.1 | 96.1 | 0.8 | 0.9 | 278 | 77.5 |
| Comparative example 5 | 95.1 | 97.6 | 0.8 | 0.8 | 325 | 69.3 |
| Comparative example 6 | 95.7 | 97.5 | 0.7 | 0.8 | 315 | 88.2 |

[Table 3]

| | Porous support | | Amine aqueous solution | | | | |
|---|---|---|---|---|---|---|---|
| | Drying temperature (°C) | Water content (g/m²) | m-phenylenediamine (% by weight) | Triethylamine (% by weight) | Camphorsulfonic acid (% by weight) | Ethylene glycol (% by weight) | Viscosity (mPa·s) |
| Example 23 | Room temperature | 1 | 1.5 | 3 | 6 | 50 | 7 |
| Example 24 | Room temperature | 1 | 1.5 | 3 | 6 | 70 | 10 |
| Example 25 | Room temperature | 1 | 1.5 | 3 | 6 | 80 | 15 |

| | Permeation examination | | Amount of unreacted polyfunctional amine component | |
|---|---|---|---|---|
| | Salt-blocking rate (%) before washing | Permeation flux (m³/m²·d) | Before washing (mg/m²) | After washing (mg/m²) |
| Example 23 | 98.7 | 0.5 | 125 | 15.5 |
| Example 24 | 97.9 | 1.3 | 121 | 11.6 |
| Example 25 | 96.0 | 1.6 | 142 | 18.7 |

[Table 4]

| | Moisturizer | | Moisturing treatment | | | Drying treatment | | Permeation examination | |
|---|---|---|---|---|---|---|---|---|---|
| | Kind | Concentration (% by weight) | process | Method | Processing time (second) | Drying temperature (°C) | Drying period of time (second) | Salt blocking rate (%) | Permea tion flux ($m^3/m^2 \cdot d$) |
| Example 26 | Sodium acetate | 1 | After washing | Immersion | 600 | 120 | 600 | 99.7 | 1.3 |
| Example 27 | Sodium lactate | 1 | After washing | Immersion | 600 | 120 | 600 | 99.7 | 1.5 |
| Example 28 | Sodium glutamate | 1 | After washing | Immersion | 600 | 120 | 600 | 99.3 | 1.3 |
| Example 29 | Sodium oleate | 1 | After washing | Immersion | 600 | 120 | 600 | 99.7 | 1.1 |
| Example 30 | Sodium hydrogencarbonate | 1 | After washing | Immersion | 600 | 120 | 600 | 99.0 | 1.2 |
| Example 31 | Potassium hydrogencarbonate | 1 | After washing | Immersion | 600 | 120 | 600 | 99.3 | 1.4 |
| Example 32 | Sodium chloride | 1 | After washing | Immersion | 600 | 120 | 600 | 99.4 | 1.1 |
| Example 33 | Sodium carbonate | 1 | After washing | Immersion | 600 | 120 | 600 | 99.8 | 1.0 |
| Example 34 | Monosodium dihydrogen phosphate | 1 | After washing | Immersion | 600 | 120 | 600 | 99.2 | 1.0 |
| Example 35 | Sodium lauryl sulfate | 1 | After washing | Immersion | 600 | 120 | 600 | 99.5 | 1.6 |
| Example 36 | Alkyl benzene sodium sulfonate | 1 | After washing | Immersion | 600 | 120 | 600 | 99.6 | 1.7 |
| Example 37 | Glucose | 5 | After washing | Immersion | 600 | 120 | 600 | 99.4 | 1.5 |
| Example 38 | Saccharose | 5 | After washing | Immersion | 600 | 120 | 600 | 99.6 | 1.1 |

(continued)

| | Moisturizer | | Moisturing treatment | | | Drying treatment | | Permeation examination | |
|---|---|---|---|---|---|---|---|---|---|
| | Kind | Concentration (% by weight) | process | Method | Processing time (second) | Drying temperature (°C) | Drying period of time (second) | Salt blocking rate (%) | Permea tion flux (m$^3$/m$^2$ ·d) |
| Example 39 | Glycine | 5 | After washing | Immersion | 600 | 120 | 600 | 98.6 | 0.8 |
| Example 40 | Sodium acetate | 1 | After washing | Application | 600 | 120 | 600 | 99.6 | 1.3 |
| Example 41 | Sodium lauryl sulfate | 1 | After washing | Application | 600 | 120 | 600 | 99.0 | 1.3 |
| Example 42 | Glucose | 5 | After washing | Application | 600 | 120 | 600 | 99.0 | 1.5 |
| Example 43 | Sodium glutamate | 1 | After washing | Application | 600 | 120 | 600 | 99.3 | 1.4 |
| Example 44 | Sodium lactate | 1 | After washing | Spraying | 600 | 120 | 600 | 99.7 | 1.4 |
| Example 45 | Sodium acetate | 1 | at washing | Immersion | 600 | 120 | 600 | 99.6 | 1.3 |
| Example 46 | Potassium hydrogencarbonate | 1 | at washing | Immersion | 600 | 120 | 600 | 99.2 | 1.4 |
| Example 47 | Glucose | 10 | at washing | Immersion | 600 | 50 | 600 | 99.3 | 1.5 |
| Comparative example 4 | - | - | - | - | - | 120 | 120 | 96.0 | 0.1 |

As is clearly shown in Tables 1 to 3, beforehand application of the amine impermeable treatment to the porous support can effectively prevent permeation of the polyfunctional amine component to into the porous support, and can reduce content of the unreacted polyfunctional amine component in the porous support after skin layer formation. And thereby without causing almost all deterioration of membrane performance, the content of the unreacted polyfunctional amine component in the composite semipermeable membrane can be extremely reduced by the simple subsequent membrane washing treatment in shorter period of time. Furthermore, as Table 4 clearly shows, application of preceding moisturing treatment to the washed composite semipermeable membrane can provide a dried composite semipermeable membrane having excellent in water permeability and salt-blocking rate even after drying treatment.

## Claims

1. A composite semipermeable membrane having a skin layer formed on the surface of a porous support, the skin layer comprising a polyamide resin obtained by interfacial polymerization of a polyfunctional amine component and a polyfunctional acid halide component, wherein the content of an unreacted polyfunctional amine component is 200 mg/m$^2$ or less after formation of the skin layer and before a membrane washing treatment, and the content of the unreacted polyfunctional amine component after the membrane washing treatment is 20 mg/m$^2$ or less.

2. A process for producing a composite semipermeable membrane having a skin layer formed on the surface of a porous support, the skin layer comprising a polyamide resin obtained by interfacial polymerization of a polyfunctional amine component and a polyfunctional acid halide component, comprising the steps of:

   applying an amine impermeable treatment to the porous support before formation on the porous support of a covering layer of an aqueous solution comprising an amine aqueous solution containing a polyfunctional amine component; and
   treating the membrane by a membrane washing treatment for adjusting the content of the unreacted polyfunctional amine component to be 20 mg/m$^2$ or less after formation of the skin layer.

3. The process for producing the composite semipermeable membrane according to Claim 2, wherein the content of the unreacted polyfunctional amine component is 200 mg/m$^2$ or less after formation of the skin layer and before the membrane washing treatment.

4. The process for producing the composite semipermeable membrane according to Claim 2, wherein the amine impermeable treatment is a treatment for reducing the water content in the porous support to be 20 g/m$^2$ or less.

5. The process for producing the composite semipermeable membrane according to Claim 2, wherein the viscosity of the amine aqueous solution is 7 mPa·s or more.

6. The process for producing the composite semipermeable membrane according to Claim 2, wherein the amine aqueous solution has a moving velocity of 0.3 mg/m$^2$·sec. or less in the porous support of the polyfunctional amine component in contact to the porous support at an ordinary pressure.

7. The process for producing the composite semipermeable membrane according to Claim 2, comprising the step of applying an amine aqueous solution so that the amount of the polyfunctional amine component supplied on the porous support is 200 to 600 mg/m$^2$.

8. The process for producing the composite semipermeable membrane according to Claim 2, comprising the steps of:

   moisturizing the membrane after washing after membrane washing treatment; and
   drying the membrane after the moisturing treatment.

9. The process for producing the composite semipermeable membrane according to Claim 2, wherein the membrane washing treatment applies a moisturing treatment simultaneously with washing, and the process further comprises a drying process for drying the membrane after the washing moisturing treatment.

10. The process for producing the composite semipermeable membrane according to Claim 8 or 9, wherein a moisturizer used in moisturing treatment is an organic acid metal salt and/or an inorganic acid metal salt.

**11.** The process for producing the composite semipermeable membrane according to Claim 10, wherein the organic acid metal salt is at least one kind of organic acid alkali metal salt selected from the group consisting of an alkali metal acetate, alkali metal lactate, and alkali metal glutamate.

**12.** The process for producing the composite semipermeable membrane according to Claim 10, wherein the inorganic acid metal salt is at least one kind of inorganic acid alkali metal salt selected from the group consisting of an alkali metal hydrogencarbonate, dialkali metal monohydrogen phosphate, and monoalkali metal dihydrogen phosphate.

**13.** The process for producing the composite semipermeable membrane according to Claim 11 or 12, wherein the alkali metal is sodium or potassium.

**14.** A composite semipermeable membrane obtained by the producing process according to Claim 2.

## INTERNATIONAL SEARCH REPORT

| International application No. |
| --- |
| PCT/JP2005/016617 |

A. CLASSIFICATION OF SUBJECT MATTER
*B01D71/56*(2006.01), *B01D69/12*(2006.01)

According to International Patent Classification (IPC) or to both national classification and IPC

B. FIELDS SEARCHED

Minimum documentation searched (classification system followed by classification symbols)
*B01D61/00*(2006.01)-*71/82*(2006.01), *C02F1/44*(2006.01)

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2002-177750 A  (Toray Industries, Inc.),<br>25 June, 2002 (25.06.00),<br>Par. Nos. [0006], [0026], [0053]<br>(Family: none) | 1<br>2,3,5-8,14<br>4,9-13 |
| X<br>Y | JP 2000-24470 A  (Nitto Denko Corp.),<br>25 January, 2000 (25.01.00),<br>Claims; Par. Nos. [0002], [0018], [0023] to<br>[0025], [0034]<br>(Family: none) | 1<br>2,3,5-8,14 |
| X<br>Y | JP 3525759 B2  (Toray Industries, Inc.),<br>27 February, 2004 (27.02.04),<br>Claims; Par. Nos. [0013], [0019] to [0022]<br>(Family: none) | 1<br>2,3,5-8,14 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>24 November, 2005 (24.11.05) | Date of mailing of the international search report<br>06 December, 2005 (06.12.05) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2005/016617 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 61-46207 A (Nitto Denko Corp.), 06 March, 1986 (06.03.86), Claims; page 2, upper right column, line 18 to lower right column, line 15 (Family: none) | 2,3,5-8,14 |
| Y | JP 53-16373 A (Toyo Soda Manufacturing Co., Ltd.), 15 February, 1978 (15.02.78), Claims; page 2, upper right column, lines 5 to 14, lower right column, line 8 to page 3, upper left column, line 6 (Family: none) | 2,3,5-8,14 |
| Y | JP 2000-325759 A (Toray Industries, Inc.), 28 November, 2000 (28.11.00), Claims; Par. Nos. [0019] to [0020] (Family: none) | 8 |

Form PCT/ISA/210 (continuation of second sheet) (April 2005)

**REFERENCES CITED IN THE DESCRIPTION**

**Patent documents cited in the description**

- JP 55147106 A
- JP 62121603 A
- JP 63218208 A
- JP 2187135 A
- JP 61042308 A
- JP 20024470 A

- JP 2002516743 W
- JP 11319517 A
- JP 58024303 A
- JP 1180208 A
- JP 8224452 A